# EUROPÄISCHE PATENTANMELDUNG

(11) **EP 0 579 946 A1**
(43) Veröffentlichungstag der Anmeldung: **26.01.1994**
(21) Anmeldenummer: 93109435.3
(22) Anmeldetag: 14.06.1993
(51) Int. Cl.: H02J 7/34, H02J 7/10

(54) **Verfahren zur Ladungserhaltung einer Akkumulatorenbatterie und Anlage zur Durchführung des Verfahrens**

(30) Priorität: 22.07.1992 DE 4224135
(71) Anmelder: VARTA Batterie Aktiengesellschaft, D-30405 Hannover (DE)
(72) Erfinder: Dennstedt, Welf, Dr., D-6233 Kelkheim-Fischbach (DE); Meissner, Eberhard, Dr., D-6238 Hofheim-Diedenbergen (DE); Borger, Waldemar, Dr., D-6370 Oberursel (DE)
(74) Vertreter: Kaiser, Dieter Ralf, Dipl.-Ing.

(57) **Zusammenfassung**

Den Kapazitätsschwund von Bleiakkumulatoren mit antimonfreien positiven Elektrodengittern im Dauerüberladebetrieb verhindern zwischenzeitliche Relaxationsphasen, bei denen die Batterie 2, die parallel zum Verbraucher 3 an das Ladegerät 1 angeschlossen ist, ohne Notwendigkeit einer Abkopplung vom Stromkreis unter Ruhespannung steht. Dabei setzt ein Regler 4 nach Maßgabe der vom Ladestrommeßgerät 5 bei E und F erfaßten Stromstärke die Ladespannung am Ladegerät 1 soweit herunter, daß der Batteriestrom einen kleineren Wert annimmt oder gleich Null wird. Eine Schaltuhr 6 steuert die Dauer und den zeitlichen Abstand der Relaxationsphasen unter Berücksichtigung von Netzausfällen und daran anschließenden Ladezeiten.

## Beschreibung

Die Erfindung betrifft ein Verfahren zur Erhaltung des Volladezustandes einer Akkumulatorenbatterie sowie eine elektrische Anlage zur Durchführung des Verfahrens.

Verfahren und Schaltungsanordnungen, bei denen es wie im aktuellen Fall insbesondere um die Notstromversorgung durch Bleiakkumulatoren geht, sind zahlreich bekannt. Bei solchen Anwendungen wird die Akkumulatorenbatterie immer im Volladezustand gehalten, wobei man bestrebt ist, die Erhaltungsladespannung möglichst so niedrig zu halten, daß sie gerade zur Kompensation der Selbstentladereaktion oder von parasitären Reaktionen wie die Wasserzersetzung bei wässrigen Elektrolyten, des Sauerstoffkreislaufes bei verschlossenen alkalischen und Blei-Akkumulatoren etc. ausreicht.

Soll der Übergang vom Netzbetrieb zum Notstrombetrieb unterbrechungsfrei erfolgen, so bietet sich in erster Linie der Bereitschaftsparallelbetrieb an, bei welchem der Verbraucher, das Ladegerät und der Akkumulator ständig parallel liegen. Ein solches Anordnungsprinzip ist z.B. der CH-PS 465695 zu entnehmen.

Nun entspricht es der Erfahrung, daß Bleibatterien mit Pb/Ca-Legierungen im Gitter der positiven Elektrode einen allmählichen Kapazitätsverlust erleiden, wenn sie einem kontinuierlichen Zyklenbetrieb unterworfen sind. Ein solcher Kapazitätsrückgang findet ebenso bei Dauerüberladung statt.

Ursache dieses Phänomens ist offenbar das Fehlen von Antimon in der Gitterlegierung, weshalb man es auch als "antimonfreier Effekt", AFE, bezeichnet. Die Elektrode gerät dabei in einen Zustand der partiellen Nicht-Entladbarkeit, obwohl die Ladung in der Elektrode vorhanden ist (siehe auch "Bleiakkumulatoren", hrsgg. von der VARTA Batterie AG, VDI-Verlag GmbH Düsseldorf 1986, 11. Aufl., S.68; H. Bode, Lead Acid Batteries, John Wiley & Sons, Inc. 1977, S. 239). Im Ergebnis bedeutet dies eine Blockade der Entladung des aktiven Materials.

Der AFE kann durch Stehenlassen (Relaxieren) der Batterie unter Ruhespannung ausgeheilt werden, durch rechtzeitige Pausen während eines Zyklenbetriebes aber auch vermieden werden.

Ein zeitweiliges Stehenlassen der Batterien im abgeschalteten Zustand ist bei den herkömmlichen Anlagen, die der unterbrechungsfreien Notstromversorgung dienen, jedoch nicht möglich, weil sie ständig im Stromkreis angeschlossen sind und auf Erhaltungsladung stehen.

Der Erfindung liegt daher die Aufgabe zugrunde, ein Verfahren zur Ladungserhaltung von Bleibatterien mit antimonarmen bzw. antimonfreien Legierungsgittern in ihren positiven Elektroden anzugeben, mit dem es möglich ist, den AFE zu vermeiden und bei dem dennoch im Notfall der Übergang zum Batteriebetrieb unterbrechungsfrei erfolgt, so daß keinerlei Risiken durch Schaltvorgänge auftreten.

Die Aufgabe wird erfindungsgemäß mit einem Verfahren gelöst, wie es im Patentanspruch 1 definiert ist.

Danach läßt sich die Elektrodenkapazität auf Dauer stabilisieren, indem in vorgegebenen Abständen, etwa mittels einer Schaltuhr, die vom Ladegerät dauernd zur Verfügung stehende Ladespannung so verändert wird, daß der Ladestrom für die Dauer eines Zeitintervalls auf einen Minimalwert reduziert ist, welcher etwa im Bereich 0 bis 20% des Wertes bei der üblichen Ladeerhaltungsspannung liegen sollte. Im günstigsten Fall ist der Ladestrom gleich oder annähernd Null.

Indem sich so die Batteriespannung und die aufgeprägte Ladespannung annähernd die Waage halten, steht die Batterie quasi unter Ruhespannung. Damit ist die Bedingung erfüllt, unter der sie relaxieren und der AFE ausgeheilt werden kann.

Die Zeitabstände, in denen die Ladestromreduzierung wiederholt wird, sollten zwischen 2 und 40 Wochen liegen, wobei Zeiträume von etwa 4 Wochen mit ständiger Dauerüberladung besonders günstig sind. Dagegen beträgt die Dauer eines Relaxationsintervalls erfindungsgemäß etwa 5 Tage.

Tritt jedoch innerhalb dieses Zeitrhythmus ein Netzausfall ein, so muß nach Wiedereinsetzen der Netzspannung die Batterie zuerst wieder voll aufgeladen werden, damit sichergestellt ist, daß bei der folgenden Verminderung der Ladespannung stets von einem Zustand der Volladung ausgegangen wird.

Zur Volladung der Batterie nach einem Notstrombetrieb bedarf es einer vom Typ des Akkumulatos abhängigen Wiederaufladezeit. In jedem Fall ist aber die Volladung nach 48-stündiger Wiederaufladung gewährleistet. Hat die Dauer des Netzausfalls X Stunden betragen, so wäre der Zeitpunkt bis zur nächsten Wiederkehr der Ladestromreduzierung um (48 + X) Stunden hinauszuschieben.

Im folgenden wird anhand einer Figur eine elektrische Anlage beschrieben, welche erfindungsgemäß die wiederholte Relaxation einer Akkumulatorenbatterie im Dauerüberladebetrieb ermöglicht, ohne daß die Batterie während der Erholungsphase vom Stromkreis abgekoppelt und ihre ständige Einsatzbereitschaft unterbrochen werden muß.

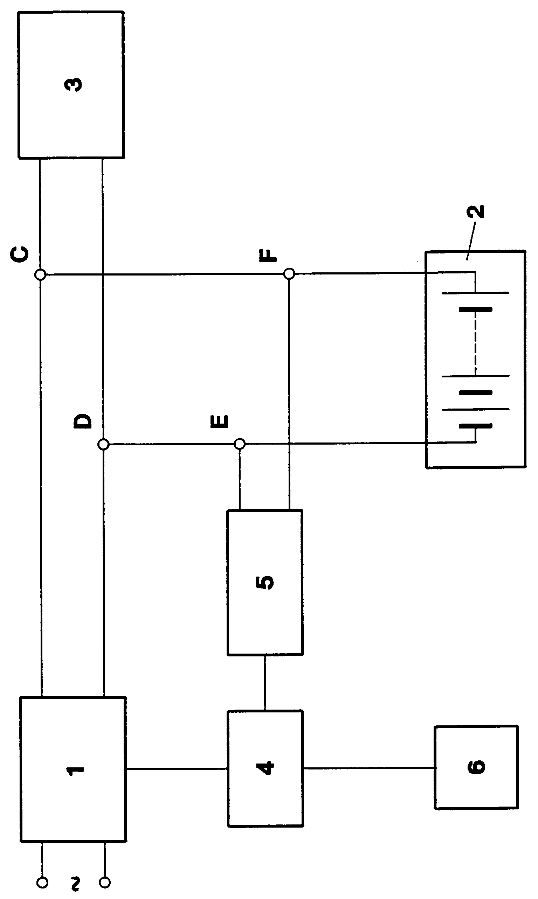

Gemäß der Figur weist die elektrische Anlage ein durch Wechselstrom gespeistes Ladegerät 1, eine Akkumulatorenbatterie 2 und einen Verbraucher 3 auf, die in Bereitschaftsparallelschaltung geschaltet sind. Während des Netzbetriebes erhält der Verbraucher die erforderliche Spannung im Rahmen zulässiger Schwankungen. Bei Netzausfall versorgt die Batterie den Verbraucher wie üblich mit ihrer Entladespannung. Nach beendetem Netzausfall versorgt das Ladegerät die Batterie zunächst mit der üblichen Ladespannung. Diese kann, muß jedoch nicht höher sein als die nach Erreichung der Volladung angewandte Ladeerhaltungsspannung (Floatspannung).

Die Modifizierung des normalen Bereitschaftsbetriebes der Batterie durch zeitgesteuerte Einschübe von Relaxationsphasen wird nun erfindungsgemäß dadurch ermöglicht, daß die Batterie über einen Regler 4 mit dem Ladegerät rückgekoppelt ist. Das Ladegerät besitzt zu diesem Zweck einen Steuereingang für den Regler, während dem Regler noch ein Strommeßgerät 5 zur Kontrolle des Ladestromes bzw. Batteriestromes vorgeschaltet ist. Ladegerät, Regler und Strommeßgerät bilden somit einen geschlossenen Regelkreis.

Zum Auslösen und Beenden der vorgesehenen Betriebsphasen ist dem Regler schließlich eine Uhr 6 zugeschaltet.

Tritt nun mit entsprechender Vorgabe der Zeitpunkt für eine Relaxation ein, mißt das Ladestrommeßgerät 5 Stärke und Richtung des bei E und F fließenden Batteriestromes und gibt die Meßwerte an den Regler weiter. Dieser steuert nach Maßgabe der empfangenen Meßwerte die Ladespannung am Ladegerät (Punkte C und D) in dem Sinne, daß der Batteriestrom auf einen niedrigen Wert, vorzugsweise auf Null geregelt wird.

Dabei findet die Rückkopplung zwischen Batteriestrom und Ladespannung in der Weise statt, daß, solange noch Strom in Laderichtung fließt, die Gleichspannung bei C und D verkleinert wird, und daß bei einem Strom in Entladerichtung die Spannung vergrößert wird. Dadurch pendelt sich der Batteriestrom unter immer kleineren Schwankungen in die eine und die andere Richtung schließlich auf den kleineren Wert und die Gleichspannung auf einen konstanten Wert, der annähernd einer Ruhespannung entspricht, ein.

Während der nun herrschenden Relaxationsphase erhält der Verbraucher mindestens diese Ruhespannung der Batterie, also eine Spannung zwischen Floatspannung und Entladespannung. Die Batterie bleibt dabei im Falle eines Netzausfalls voll einsatzbereit.

Nach Ablauf der Relaxationszeit (z.B. 5Tage) wird durch die Uhr wieder der normale Dauerüberladebetrieb eingeschaltet, bei dem an der Batterie eine Floatspannung von beispielsweise 2,25 Volt/Zelle anliegt und ein entsprechender Ladungserhaltungsstrom fließt.

Tritt Netzausfall ein, muß bei der Wiederaufnahme des Relaxationsrhythmus die nach dem Stromausfall erforderliche Aufladung berücksichtigt werden. Dies kann auf einfache Weise dadurch geschehen, daß der Netzausfall einen Stillstand der Uhr bewirkt, wobei der Stillstand jedoch für die zur Wiederaufladung der Batterie notwendige Zeit, z.B. 48 Stunden, über das Ende des Netzausfalls hinaus anhalten muß. Der während dieser Zeit nur in der Laderichtung fließende Strom kann durch einen Strommengenintegrator (elektrochemische Schaltzelle) erfaßt oder durch einen elektronischen Zähler registriert werden. Sobald die zur Volladung der Batterie benötigte Strommenge erfaßt ist, wird durch ein geeignetes Spannungssignal die Uhr wieder in Gang gesetzt. Nach beispielsweise 4 Wochen Dauerüberladebetrieb leitet die Uhr durch einen Schaltimpuls auf den Regler die nächste Relaxationsphase ein.

Die Wiederaufladung der Batterie nach einem Störfall bzw. Notstrombetrieb hängt von der Ausführung des Ladegerätes ab. Sie kann, sobald die Netzspannung wieder zur Verfügung steht, mit einem regulären Ladestrom oder mit reiner U-Ladung erfolgen.

## Patentansprüche

1. Verfahren zur Erhaltung des Volladezustandes einer Akkumulatorenbatterie im Bereitschaftsparallelbetrieb, bei dem die Batterie ständig mit einer Ladespannung aus einem Ladegerät beaufschlagt wird, dadurch gekennzeichnet, daß in vorgegebenen Abständen die Ladespannung für einen bestimmten Zeitraum so eingeregelt wird, daß der Ladestrom der Akkumulatorenbatterie ein Minimum erreicht.

2. Verfahren nach Anspruch 1, dadurch gekennzeichnet, daß der Ladestrom auf Null geregelt wird.

3. Verfahren nach Anspruch 2, dadurch gekennzeichnet, daß der Ladestrom in Abständen von 2 bis 40 Wochen, vorzugsweise 4 Wochen, herabgesetzt wird.

4. Verfahren nach Anspruch 3, dadurch gekennzeichnet, daß die Zeitdauer, in welcher der Ladestrom auf ein Minimum oder Null herabgesetzt ist, 5 Tage beträgt.

5. Verfahren nach einem der Ansprüche 1 bis 4, dadurch gekennzeichnet, daß nach einem Netzausfall der zeitliche Abstand für die Wiederkehr einer Betriebsphase mit minimiertem Ladestrom um die Dauer X des Netzausfalles zuzüglich der typischen Wiederaufladezeit des Akkumulators verlängert wird.

6. Elektrische Anlage zur Durchführung des Verfahrens nach Anspruch 1, dadurch gekennzeichnet, daß sie ein Ladegerät (1), eine Akkumulatorenbatterie (2) und einen Verbraucher (3) aufweist, die in Bereitschaftsparallelschaltung geschaltet sind, wobei das Ladegerät zur Steuerung seiner Ausgangsspannung einen Steuereingang besitzt, welcher mit einem Regler (4) verbunden ist, daß dem Regler ein Ladestrommeßgerät (5) zur Messung des Batteriestromes vorgeschaltet ist, derart, daß Ladegerät, Regler und Strommeßgerät einen geschlossenen Regelkreis bilden, und daß durch Einwirkung des Reglers auf das Ladegerät dessen Ausgangsspannung nach Maßgabe der vom Strommeßgerät erfaßten Stromstärke und Stromrichtung so veränderbar ist, daß durch die Batterie, dem Zustand einer unter Ruhespannung stehenden Batterie entsprechend, praktisch kein Strom fließt.

7. Elektrische Anlage nach Anspruch 6, dadurch gekennzeichnet, daß dem Regler eine Uhr (6) zugeschaltet ist.
